(19) Europäisches Patentamt
European Patent Office
Office européen des brevets

(11) **EP 2 323 308 B1**

(12) **EUROPEAN PATENT SPECIFICATION**

(45) Date of publication and mention
of the grant of the patent:
**23.03.2016 Bulletin 2016/12**

(51) Int Cl.:
*H04L 9/32* *(2006.01)*          *G06Q 20/40* *(2012.01)*
*G07F 7/10* *(2006.01)*

(21) Application number: **09175755.9**

(22) Date of filing: **12.11.2009**

(54) **A method of assigning a secret to a security token, a method of operating a security token, storage medium and security token**

Verfahren für die Zuweisung eines Geheimnisses auf ein Sicherheitstoken, Verfahren zum Betreiben eines Sicherheitstoken, Speichermedium und Sicherheitstoken

Procédé d'attribution d'un secret à un jeton de sécurité, procédé de fonctionnement d'un jeton de sécurité, support de stockage et jeton de sécurité

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(43) Date of publication of application:
**18.05.2011 Bulletin 2011/20**

(73) Proprietor: **Morpho Cards GmbH**
**24220 Flintbek (DE)**

(72) Inventor: **Hübner, Thomas Dr.**
**33100 Paderborn (DE)**

(74) Representative: **Richardt Patentanwälte PartG mbB**
**Wilhelmstraße 7**
**65185 Wiesbaden (DE)**

(56) References cited:
**WO-A1-03/100730          WO-A1-2008/010773**
**WO-A1-2009/009788       US-A1- 2002 124 176**
**US-A1- 2008 013 804      US-B1- 7 526 653**

• **CLANCY T ET AL: "Secure Smartcard-Based Fingerprint Authentication" WBMA, ACM, US, 8 November 2003 (2003-11-08), pages 1-10, XP007905701 ISBN: 978-1-58113-779-8**

**Description**

**Field of the invention**

The present invention relates to the field of security tokens, and more particularly to securely assigning a secret to a security token.

**Background and related art**

Security tokens are as such known from the prior art. Typically a secret personal identification number (PIN) is stored in a security token for a user's authentication vis-à-vis the security token. For the purpose of authentication the user has to enter the PIN into the security token which determines whether the stored PIN and the entered PIN are matching.

Further, security tokens for generating a digital signature are known. A security tokens for generating a digital signature stores a private key of a cryptographic key pair of a user. The secrecy of the private key stored in the security token can be preserved by hardware measures such that when the hardware token is opened, the memory that stores the private key is unavoidably destroyed.

WO 2008/010773 shows a method of recovering a secret by decrypting a biometrically encrypted secret using biometric data and checking the secret by comparing a hash value of the recovered secret with a hash value of the original secret that was generated during the enrolment phase.

The invention aims to provide an improved method of assigning a secret to a security token, a method of operating a security token for performing a cryptographic operation, a storage medium and a security token.

**Summary of the invention**

The present invention provides a method of operating a security token for performing a cryptographic operation as claimed in claim 1, a storage medium storing executable instructions as claimed in claim 11 and a security token as claimed in the independent claim 12. Embodiments of the invention are given in the dependent claims.

In accordance with embodiments of the invention there is provided a method of assigning a secret to a security token comprising receiving first biometrical data of a biometrical feature of a person by the security token, storing the first biometrical data in the security token, storing the unencrypted secret in the security token, biometrically encrypting the secret using the first biometrical data by the security token, storing the encrypted secret in the security token, and erasing the unencrypted secret and the first biometrical data from the security token.

A 'security token' as understood herein encompasses any portable physical device that includes a cryptographic function, such as for the purposes of authentication, verification, encryption, decryption or generating a digital signature. Such physical devices include hardware tokens, authentication tokens, USB tokens, in particular USB sticks, chip cards, integrated circuit cards, smart cards, subscriber identity module (SIM) cards, in particular USIM cards, identity documents having an integrated electronic circuit, and RFID tags.

The term 'biometrical data' as used herein may refer to the data delivered by a biometrical sensor, such as a fingerprint sensor or an optical sensor, as a result of biometrical data acquisition, or to the result of processing of biometrical raw data that is delivered by such a biometrical sensor. For example the processing performed by the security token using the biometrical raw data may encompass rounding and/or a projection of the biometrical raw data onto a predefined finite body.

The term 'biometric encryption' as used herein encompasses any encryption method that uses biometrical data or data that is derived from biometrical data as input information for a given encryption algorithm. For example, the biometrical data may be used as a key for performing the encryption of the secret or a key is derived from the biometrical data which is then used by the encryption algorithm to encrypt the secret.

In accordance with embodiments of the invention the biometrical data is fingerprint data, iris scan data, voice data, or facial biometrical data. The biometrical data can be acquired by means of an external sensor, such as a fingerprint sensor or a camera, that is directly or indirectly coupled to the security token or by a sensor that is integrated into the security token.

The secret to be assigned to the security token can be generated by the security token itself, such as by means of a random number generator, or it can be externally selected, such as by a user, and entered into the security token via a communication interface of the security token.

Embodiments of the present invention are particularly advantageous as the unencrypted secret is not permanently stored in the security token or elsewhere. After encryption the unencrypted secret is erased as well as the first biometrical data that was used for performing the biometrical encryption operation. As a result only the biometrically encrypted secret is stored in non-volatile memory of the security token. The only way to decrypt the secret is to acquire biometrical data of the same biometrical feature of the same person that was used for the encryption providing an utmost degree of security as regards protection of the secret.

In accordance with an embodiment of the invention, the security token has volatile storage, such as the random access memory of its processor, and non-volatile memory. The first biometrical data and the secret are temporarily stored in the volatile storage and the encrypted secret is stored in the non-volatile storage. Assuming that the security token does not have an integrated power supply as is typically the case for smart cards, removing the security token from some external device that provides the power supply, such as a chip card reader, automatically erases the biometrical data and the unencrypted secret stored in the volatile storage means.

In accordance with an embodiment of the invention the first biometrical data and/or the secret are securely erased from the volatile memory while the power supply is still available. This can be implemented by execution of a program module that executes a respective routine for securely erasing the first biometrical data and/or the secret from a RAM of the security token.

In accordance with an embodiment of the invention the biometrical encryption of the secret comprises correction encoding of the unencrypted secret.

The term 'error correction encoding' as understood herein encompasses any encoding of the secret that allows error detection and correction, in particular by adding redundant data to the secret, such as by forward error correction (FEC) using convolutional or block codes.

An XOR operation is performed on the error correction encoded secret and the first biometrical data to provide the biometrically encrypted secret. The biometrically encrypted secret is stored in non-volatile memory of the security token for later use in a cryptographic operation, such as for the purposes of authentication of a user or performing another cryptographic operation, in particular an encoding or decoding operation or the generation of a digital signature.

For decrypting the biometrically encrypted secret second biometrical data is acquired of the same biometrical feature of the same person from which the first biometrical data was acquired. The second biometrical data typically is not identical to the first biometrical data due to inaccuracies of the acquisition process of the biometrical data, such as due to inaccuracies of the biometrical sensor that is used for the acquisition, inaccuracies regarding the positioning of the biometrical feature relative to the sensor and/or rounding errors of the algorithm that is used to transform the biometrical raw data delivered by the biometrical sensor into the biometrical data. Due to the error correction encoding of the secret the correct secret can be recovered from the biometrically encrypted secret even if the second biometrical data is not exactly the same as the first biometrical data. If the second biometrical data is not identical to the first biometrical data as it is typically the case, the result of the XOR operation performed on the biometrically encrypted secret and the second biometrical data provides a codeword that contains errors. By error correction decoding of the codeword the correct secret is still recovered.

In accordance with an embodiment of the invention a polynom p is used for biometrically encoding the secret, such as

$$p(x) = b_0 + b_1 x + b_2 x^2 + b_3 x^3 + ... + b_{k-1} x^{k-1}$$

For encrypting a secret having a number k of digits the polynom p having grade k - 1 is used as the coefficients of the polynom p are determined by the digits of the secret to be encoded, i.e. the secret being $(b_0, b_i, ..., b_{k-1})$.

The first biometrical data is interpreted to be the x-coordinates of points that are located on the polynom p that is determined by the secret, such as first biometrical data $A = (x_1, x_2, ..., x_t)$, where t is the number of values contained in the feature set A that constitutes the first biometrical data. Preferably t is greater than k for adding redundancy.

Using the x-coordinates provided by the feature set A the number of t points that are located on the polynom p are calculated. These points on the polynom p that are determined by the x-coordinates given by the feature set A are referred to as 'real points' in the following, i.e. $P_1 = (X_1, p(x_1))$, $P_2 = (X_2, p(X_2))$,..., $Pt = (x_t, p(x_t))$.

The number of randomly selected points that are not located on the polynom p is combined with the real points. These randomly selected points that are not located on the polynom p are referred to as 'stray points' in the following. For obtaining a total number of r points a number of r - t stray points is added to the set of real points. The set union, which is the union of the set of real points and the set of stray points, constitutes the biometrically encrypted secret wherein no information is stored whether a given point is a real point or a stray point in order to 'disguise' the presence of the real points within the set union. Hence, the real points cannot be identified in the set union of the r points by a third party attack. The r points are stored in non-volatile memory of the security token for later use.

In accordance with an embodiment of the invention the set union is provided in the form of an unordered list that contains data being indicative of the real points and the stray points such as in random order.

For decryption of the biometrically encrypted secret that is represented by the set union, the second biometrical data is acquired. The second biometrical data is used to identify at least a subset of the real points within the set union.

For example, if an x coordinate given by a value the feature set A' of the second biometrical data matches an x coordinate of one of the r points of the set union that point is considered to be a real point. It is important to note that not all of the real points contained in the set of r points need to be identified this way due to the redundancy that has been added in the encoding operation. Hence, the second biometrical data does not need to be exactly identical to the first biometrical data for obtaining a correctly decoded secret.

From the t values contained in the feature set A' only k values need to match one of the x-coordinates of the r points for identification of k real points. As the k real points unequivocally determine the polynom p, the coefficients $b_0$, $b_1$,..., $b_{k-1}$ of the polynom p can be obtained by calculation, such as by resolution of an equation system given by the identified real points. Using Reed Solomon decoding the correct polynom p can even be recovered if some stray points in addition to the real points are erroneously selected from the set of r points using the x-coordinates provided by the feature set A'.

In accordance with an embodiment of the invention a hash value of the unencrypted secret is generated by the security token and output for use as a so called pseudo identity (PI) by the person. The PI can be used for authentication purposes vis-à-vis the security token.

In accordance with an embodiment of the invention the encrypted secret can be stored in a template.

Embodiments are the invention are particularly advantageous as the encrypted secret can be generated by the security token itself, such as by so called on-card generation, without a need to enter the secret. For example, the secret is provided by a random number generator of the security token. This has the advantage that no external storage of the secret needs to occur and no transmission of the secret from an external entity, such as a personal computer or a chip card reader, to the security token that would imply the risk of eavesdropping on the transmission of the secret. Furthermore, embodiments of the invention are advantageous as the personal computer or a chip card reader does not need to be a trusted entity which is due to the fact that no critical data needs to be communicated from the security token to such an external entity. Moreover, no critical data will be even temporarily generated outside the token (e.g. in the card reader, terminal or PC).

Alternatively, the biometrically encrypted secret can be generated by an external computer system using the first biometrical data. The biometrically encrypted secret is stored in the security token such as by using a personalization technique. As a further alternative the biometrically encrypted secret is outputted by the security token via an external interface, such as for use a one-time password or as a cryptographic key.

Embodiments of the invention are particularly advantageous because the encrypted secret does not need to be output by the security token for performing a cryptographic operation such as for the purpose of verification/authentication, decryption, encryption or the generation of a digital signature. Both the decryption of the secret and the performance of the cryptographic operation can be performed by the security token itself such that no sensitive data needs to be output from the security token for the performance of such an operation; any critical data that is temporarily available due to the performance of the cryptographic operation, such as the decrypted secret, the biometrical data, the selection of real points, the hash value constituting the pseudo identity or the like can be erased after the performance of the cryptographic operation has been completed. Such erasure may occur automatically if the security token has no integrated power supply, i.e. no battery, and if the critical data except the encrypted secret is stored in volatile memory such that the critical data is erased automatically when the security token is removed from some external device that provides the power supply. In accordance with an embodiment of the invention the first biometrical data and/or the secret are securely erased from the volatile memory while the power supply is still available. This can be implemented by execution of a program module that executes a respective routine for securely erasing the first biometrical data and/or the secret from a RAM of the security token.

## Brief description of the drawings

In the following preferred embodiments of the invention will be described in greater detail by way of example only making reference to the drawings in which:

Figure 1    shows a block diagram of an embodiment of a security token being illustrative of encrypting a secret,

Figure 2    is a block diagram of the embodiment of the security token of fig. 1, being illustrative of decrypting the secret,

Figure 3    is a flow chart being illustrative of an embodiment of a method of the invention of assigning a secret to a security token,

Figure 4    is a flow chart being illustrative of an embodiment of a method of the invention of operating a security token for performing a cryptographic operation using the encrypted secret that has been assigned to the security token by the performance of the method of fig. 3,

Figure 5    is a block diagram of an embodiment of a security token of the invention being illustrative of encrypting the secret,

Figure 6    is a flow chart being illustrative of an embodiment of a method of the invention of operating a security token for performing a cryptographic operation using the encrypted secret that has been assigned to the security token by the performance of the method of fig. 5,

Figure 7    is a flow chart of a method of assigning the secret to a security token in accordance with an embodiment of the invention,

Figure 8    is a flow chart being illustrative of an embodiment of a method of the invention of operating a security token for performing a cryptographic operation using the encrypted secret that has been assigned to the security token by the performance of the method of fig. 7.

**Detailed description**

In the following detailed description like elements of the various embodiments are designated by identical reference numerals.

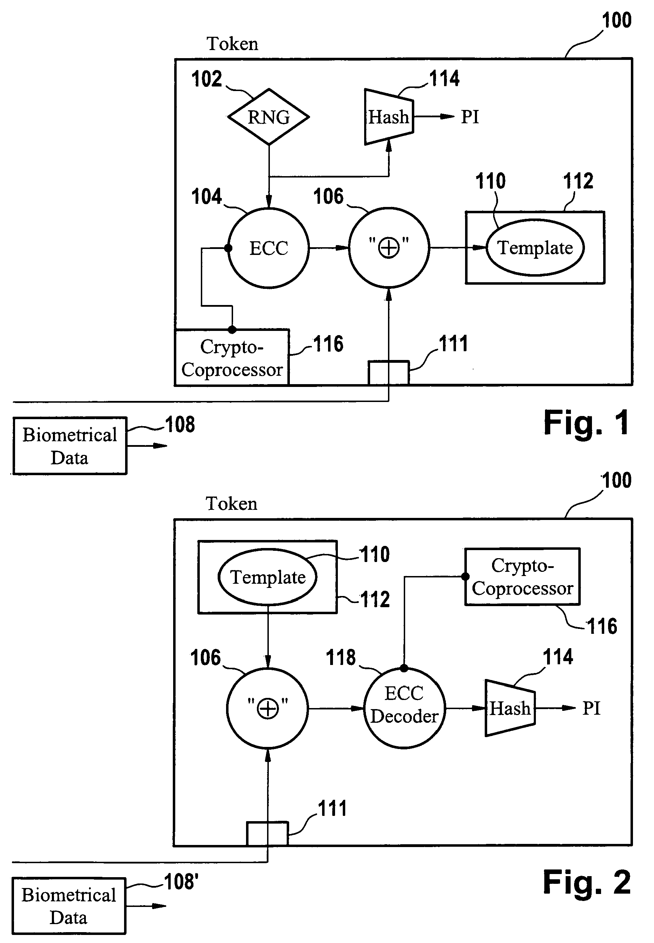

Fig. 1 shows a security token 100, such as a smart card. The security token 100 has an integrated random number generator (RNG) 102 that can generate a random number constituting the secret to be assigned to the security token. The random number generator 102 can be implemented as a pseudo random number generator or as a true physical random number generator, for example by a noise source or a binary symmetric source. In particular, the random number generator 102 can be implemented by software and/or by hardware, such as by means of a shift register with feedback, and/or by a program module that is executed by a processor of the security token 100.

The security token 100 has a module 104 for error correction encoding (ECC). The secret provided by the random number generator 102 is entered into the module 104 for error correction encoding of the secret. The module 104 may be implemented by dedicated logical circuitry or by a program module that is executed by the processor of the security token 100.

Alternatively, some the functionalities of the module 104 are implemented by a program module and other functionalities of the module 104 are implemented by dedicated logical circuitry, such as by logical circuitry of a crypto coprocessor 116. For example, the crypto coprocessor 116 may include logical circuitry for providing shift functions, polynom arithmetic functions such as for Reed-Solomon decoding. Such functions can be called by the program module such that the number of time consuming calculations that need to be implemented in software can be reduced.

The security token 100 has a logic component 106 for receiving the error corrected encoded secret from the module 104 and of first biometrical data 108 via a communication interface 111. In accordance with an embodiment of the invention, the logic component 106 can be implemented by means of the crypto coprocessor 116.

In one implementation the biometrical data 108 is acquired by an external sensor, such as a biometric sensor that is coupled to a personal computer or to an external reading device for the security token 100. The externally acquired biometrical raw data is pre-processed such as by the personal computer or the reading device, for example by rounding the biometrical raw data and/or by performing another transformation on the biometrical raw data, such as projecting the biometrical raw data. The resultant biometrical data 108 is then transmitted to the security token 100 and received by the security token 100 by means of its communication interface 111. The communication interface 111 of the security token 100 can be adapted for contact or contactless communication. For example, the communication interface 111 of the security token 100 is a contact or contactless chip card interface, an RFID interface or the like.

In another implementation the security token 100 has an integrated biometric sensor such that the acquisition of the biometric raw data and any pre-processing of the biometric raw data to provide the biometric data 108 is performed by the security token 100 itself.

The logic component 106 performs an XOR operation on the error correction encoded secret received from the module 104 and on the biometric data 108 which provides the template 110 that contains the resultant encrypted secret. The template 110 is stored in non-volatile memory 112 of the security token 100.

The logic component 106 may be implemented by dedicated logic circuitry or by a program module that is executed by the processor of the security token 100.

The security token 100 may comprise a logic component 114 that receives the unencrypted secret from the random number generator 102. The logic component 114 applies a given hashing function onto the secret and outputs a hash value of the secret that can be used as a PI. The PI can be outputted via the communication interface 111 of the security token 100 for external storage. As an alternative or in addition, the PI is stored in non-volatile memory of the security token 100 for later reference.

The logic component 114 can be implemented by dedicated logical circuitry or by a program module that is executed by the processor of the security token 100.

It is to be noted that the random number generator 102, the module 104, the logic component 106 and the logic component 114 can be provided by a single processor of the security token 100 that executes respective program instructions. The security token 100 may comprise an additional processor, i.e. crypto coprocessor 116, that implements some or all of these cryptographic functionalities, especially the error correction encoding and/or the transformation of the biometrical raw data to the biometrical data 108.

The secret provided by the random number generator 102, the error correction encoded secret provided by the module 104, the biometrical data 108 and the biometrical raw data, if applicable, as well as the PI are only temporarily stored in the security token 100 such as in a random access memory of the processor or the crypto coprocessor 116 of the security token 100. After the template 110 has been stored in the non-volatile memory 112 and after the PI has been outputted, if applicable, these critical data values are erased from the random access memory. However, for some applications it is preferred to store the PI in non-volatile memory rather than to erase it.

Fig. 2 shows the security token 100 illustrating decryption of the encrypted secret contained in the template 110. The security token 100 has a module 118 for error correction decoding of the error correction coding performed by the module 104 shown in Fig. 1. The module 118 may be implemented by dedicated logic circuitry or by a program module that is executed by the processor or the crypto coprocessor 116 of the security token 100.

Alternatively, some the functionalities of the module 118 are implemented by a program module and other functionalities of the module 118 are implemented by dedicated logical circuitry, such as by logical circuitry of a crypto coprocessor 116. For example, the crypto coprocessor 116 may include logical circuitry for providing shift functions, polynom arithmetic functions such as for Reed-Solomon decoding. Such functions can be called by the program module such that the number of time consuming calculations that need to be implemented in software can be reduced.

For decryption of the secret contained in the template 110 biometrical data acquisition is performed of the biometrical feature of the same person from which the biometrical data 108 had been obtained. Due to inaccuracies of the acquisition process the resultant second biometrical data 108' typically is not exactly identical to the original biometrical data 108. For performing the decryption operation the biometrical data 108' and the encrypted secret contained in the template 110 are XORed by the logic component 106 and the resultant codeword is then error correction decoded by the module 118 which provides the correct secret. The secret which is thus recovered can then be used by the security token 100, such as by the crypto coprocessor 116, for performing a cryptographic operation such as for the purposes of authentication, decryption, encryption or generating a digital signature, using the secret as a cryptographic key.

For example, the person from which the biometrical feature has been obtained needs to enter its PI into the security token 100. The security token 100 compares the PI received via its communication interface 111 to the PI delivered by the logic component 114, i.e. the hash value of the secret. If the received PI and the PI provided by the logic component 114 are identical, authentication of the person is successful such that the functionality of the security token 100 is enabled. For example, after successful authentication of the person the generation of a digital signature is enabled by the security token 100.

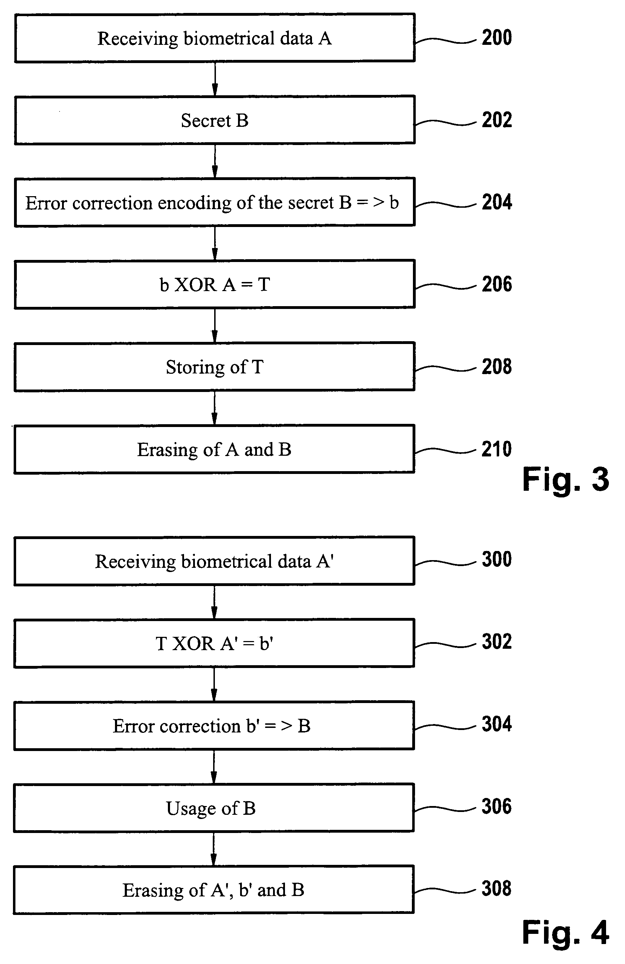

Fig. 3 is a flow chart illustrating an embodiment of assigning a secret to a security token.

In step 200 first biometrical data A is received by the security token either via an external communication interface (cf. communication interface 111 of figs. 1 and 2) or internally from an integrated biometrical sensor of the security token. In step 202 a secret B is defined. For example, the person from which the biometrical data A has been acquired may select the secret B and enter the secret B through the external communication interface into the security token. Alternatively, the secret B can be determined on the occasion of a personalization of the security token and entered into the security token via the external communication interface. Hence, the secret B can be determined outside the security token. Alternatively, the secret B is determined by the security token itself, such as by generating a random number using its internal random number generator (cf. random number generated 102 of fig. 1).

In step 204 an error correction encoding is performed on the secret B to provide the encoded secret b. In step 206 an XOR operation is performed on the error correction encoded secret b and the biometrical data A, such as by performing the XOR operation bitwise which provides the protected template T. In step 208 T is stored in non-volatile memory of the security token and in step 210 the biometrical data A and the secret B are erased from the security token such that only the template T remains within the security token as a result of the performance of the assignment of the secret to the security token. It is important to note that the secret B is not stored in any form on the security token but only the template T from which the secret B cannot be recovered unless the biometrical data is acquired from the person. Hence, the secret B is assigned to the security token without storing the secret B inside the security token or elsewhere.

In accordance with an embodiment of the invention, a hash value of the secret B is generated and output by the security token, such as via its interface 111, in step 202. The hash value is stored in non-volatile memory of the security token.

Fig. 4 illustrates the operation for recovering the secret B from the template T. In step 300 second biometrical data A' is received as a result of biometric data acquisition of the biometrical feature of the person from which the original biometrical data A had been acquired. In step 302 an XOR operation is performed on the template T and the biometrical data A' which provides the error correction encoded codeword b' that may contain errors if A' is not identical to A. In step 304 b' is corrected using error correction decoding which provides the correct secret B. In step 306 B can then be used for performing a cryptographic operation. A', b' and B are erased in step 308.

In accordance with an embodiment of the invention, the hash value of the secret B is input into the security token, such as via its interface 111, in step 300 in addition to the biometrical data A'. The received hash value is compared with the hash value stored in the non-volatile memory of the security token. Only if the received hash value and the stored hash value are matching the following steps 302 to 308 are executed and a result of the usage of B is returned by the security token via its interface. Otherwise no result is returned.

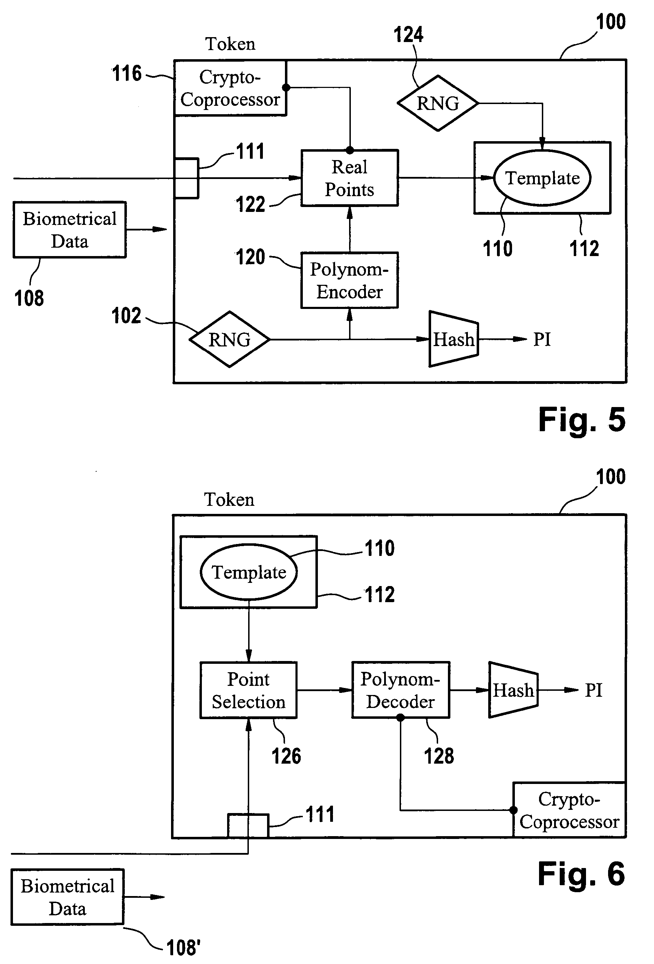

Fig. 5 shows a block diagram of an alternative embodiment of the security token 100. In contrast to the embodiments of figs. 1 and 2 a polynom p is used for the encoding. The random number generator 102 delivers a random number, i.e. the secret B, having a number of k digits $b_0$, $b_1$, ..., $b_{k-1}$. Alternatively the secret can be received via the communication interface 111. The security token 100 has a polynom encoder 120 that uses the k digits of the secret B to determine the coefficients of the polynom p, i.e.

$$p(x) = b_0 + b_1 x + b_2 x^2 + b_3 x^3 + ... + b_{k-1} x^{k-1}$$

The security token further comprises a calculation module 122 that serves for calculation of the real points that are located on the polynom p. The real points are calculated by the calculation module 122 using the biometrical data 108 that comprises t values. The polynom is evaluated at each of the t values *to provide the real points $P_i$, where $0 < i \leq t$.* This provides the set of real points containing points $P_1 = (x_1, p(x_1))$, $P_2 = (x_2, p(x_2))$,..., $Pt = (x_t, p(x_t))$.

In addition a number of r - t randomly selected stray points are provided by a random number generator 124. The set of real points provided by the calculation module 122 and the set of stray points provided by the random number generator 124 in combination constitute the template 110 containing a number of r points.

It is to be noted that the polynom encoder 120, the calculation module 122, the random number generator 124, the point selection module 126 and/or the polynom decoder 128 can be implemented by dedicated logic circuitry or by a processor of the security token 100, such as by the crypto coprocessor 116, executing respective program modules.

Fig. 6 shows the security token 100 of fig. 5 illustrating the decryption operation.

The security token 100 has a point selection module 126 for selection of real points from the template 110 and providing the identified real points to a polynom decoder 128 of the security token 100.

The selection of real points from the template 110 is performed by the point selection module 126 using the biometrical data 108'. The selection of a real point can be performed using a value contained in the biometrical data 108' and searching for a point contained in the template 110 that has a matching or closely matching x-coordinate. If such a point can be identified, this point is considered a real point. This selection process is performed for each one of the values contained in the biometrical data 108' and the resultant identified real points are provided to the polynom decoder 128 that reconstructs the polynom b from the real points delivered from the point selection module 126. As the coefficients of the polynom p constitute the secret B the polynom decoder 128 thus provides the secret B.

The polynom decoder 128 may implement Reed Solomon decoding such that even if some of the real points identified by the point selection module 126 are in fact stray points the polynom p may still be correctly decoded.

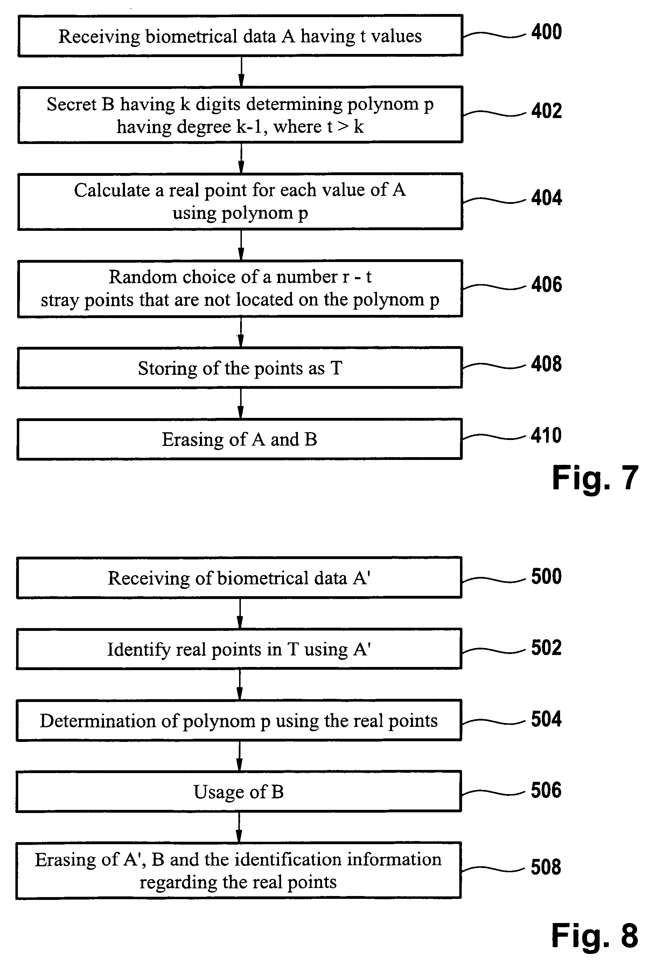

Fig. 7 illustrates a respective method of assigning the secret B to the security token using polynom encoding. In step 400 the biometrical data A having a number of t values is received by the security token. In step 402 the secret B having k digits is received or determined by the security token thus determining the polynom p having degree k - 1, where t is greater than k for adding redundancy.

In step 404 a real point that is located on the polynom p is calculated for each value of A and in step 406 a number of r - t stray points that are not located on the polynom p are added to the set of real points providing a total of r points constituting the template T. The template T is stored in non-volatile memory of the security token in step 408 and the biometrical data A and the secret B are erased from the security token in step 410.

Fig. 8 illustrates the reverse operation: in step 500 the biometrical data A' is received (cf. biometrical data 108' of fig. 6). In step 502 real points contained in T are identified using the values contained in the biometrical data A'. This is performed by searching T for the presence of a point that has a matching or closely matching x-coordinate to a value contained in A'. As a result of step 502 points are identified that are in fact real points being located on the polynom p. Depending on the implementation one or more stray points may wrongly be identified as being real points in step 502; this may occur if a stray point by chance has an x-coordinate that is matching or closely matching a value of A'.

In step 504 the polynom p is reconstructed using the real points that have been identified in step 502. Depending on the implementation the reconstruction of the polynom p is even possible if the points identified in step 502 also contain some stray points, in particular if the reconstruction of the polynom p is performed by means of Reed Solomon decoding.

In step 506 the secret B can be used for performing a cryptographic operation and in step 508 the critical data such as A', B and identification information obtained in step 502 regarding the real points is erased in step 508 from the security token.

Analogous to the embodiments of figures 3 and 4, a hash value of the secret B can be stored in the security token, such as in step 400, and the execution of steps 502 to 508 may be subject to receiving the correct hash value of the secret B, such as in step 500.

List of reference numerals

| 100 | Security token |
| --- | --- |
| 102 | Random number generator |
| 104 | Module |
| 106 | Logic component |
| 108 | Biometrical data |
| 108' | Biometrical data |
| 110 | Template |
| 111 | Communication interface |
| 112 | Non-volatile memory |
| 114 | Logic component |
| 116 | Cryptographic coprocessor |
| 118 | Module |
| 120 | Polynom encoder |
| 122 | Calculation module |
| 124 | Random number generator |
| 126 | Point selection module |
| 128 | Polynom decoder |

**Claims**

1. A method of operating a security token for performing a cryptographic operation, the security token (100) having assigned thereto a biometrically encrypted secret, the method of operating the security token comprising:

   - receiving second biometrical data (108') of the biometrical feature of the person and a pseudo identity (PI) by the security token,
   - storing the second biometrical data (108') in the security token,
   - reading the biometrically encrypted secret from a memory (112) of the security token (100),
   - biometrically decrypting the secret using the second biometrical data (108') by the security token (100),
   - comparing the pseudo identity (PI) with a hash value (114) of the unencrypted secret,
   - using the secret for performing the cryptographic operation in case the pseudo identity (PI) is identical with the hash value (114) of the unencrypted secret,
   - erasing the decrypted secret and the second biometrical data (108').

2. The method of claim 1, wherein the secret is used as a key for performing the cryptographic operation.

3. The method of claim 1 or 2, wherein biometrically decrypting the secret is performed by performing an XOR operation (106) on the encrypted secret and the second biometrical data (108') providing an incorrect secret, error correcting (118) the incorrect secret using the error correction code which provides the corrected secret, and further comprising erasing the incorrect secret.

4. The method of claim 1 or 2, the security token (100) having assigned thereto a secret in accordance by:

- receiving first biometrical data (108) of a biometrical feature of a person by the security token,
- storing the first biometrical data (108) in the security token (100),
- storing the unencrypted secret in the security token (100),
- biometrically encrypting the secret using the first biometrical data (108) by the security token (100),
- storing the encrypted secret in the security token (100),
- erasing the unencrypted secret and the first biometrical data (108) from the security token (100),
- generating (114) a hash value (114) of the unencrypted secret by the security token (100) and outputting of the hash value.

5. The method of claim 4, wherein the first biometrical data (108) and/or the secret is stored in a volatile memory (116) of the security token (100).

6. The method of claim 4 or 5, wherein the secret is generated by the security token (100).

7. The method of claims 4, 5 or 6, the security token (100) being a USB stick, a chip card, in particular a smart card, a SIM card, in particular a USIM card, or an ID document.

8. The method of any one of the preceding claims, wherein the step of biometrically encrypting the secret is performed by error correction encoding (104) of the unencrypted secret and performing an XOR operation (106) on the error correction encoded secret and the first biometrical data (108) to provide the biometrically encrypted secret.

9. The method of any one of the preceding claims 4 to 8, wherein the first biometrical data (108) has a first number (t) of values and the secret has a second number (k) of digits determining the coefficients of a polynom (p), wherein the first number is greater than the second number, wherein the step of biometrically encrypting the secret is performed by calculating a real point for each value of the first biometrical data using the polynom, and providing random stray points that are not located on the polynom, wherein a union set of the set of real points and the set of random stray points provides the biometrically encrypted secret, and further comprising erasing the real points and the random stray points from the security token (100).

10. The method of claim 9, wherein biomefirically decrypting the secret is performed by identifying (126) at least a subset of the real points contained in the encrypted secret using the second biometrical data (108'), determining the polynom using the real points which provides the secret, and further comprising erasing identification information being indicative of the identified real points from the security token (100).

11. A storage medium being readable by a processor of a security token (100), the storage medium containing instructions that when executed by the processor of the security token (100) cause the security token (100) to perform a method in accordance with any one of the preceding claims 1 to 10.

12. A security token (100) to perform a method according to any one of the claims 1 to 10 comprising:

- means (111) for acquiring biometrical data (108; 108'),
- volatile storage means (116) for temporarily storing the biometrical data and an unencrypted secret,
- means for biometrically encrypting (104, 106; 120, 122) the encrypted secret using biometrical data acquired by the means for acquiring biometrical data,
- non-volatile storage means (112) for storing the biometrically encrypted secret,
- means for generating (114) a hash value of the unencrypted secret by the security token and outputting of the hash value,
- means (116) for reading the encrypted secret from the non-volatile storage means,
- means for biometrically decrypting (106, 118; 126, 128) the encrypted secret using the biometrical data using the method of claim 1.

wherein the biometrical data (108; 108') is acquired from a biometrical feature of a person.

**Patentansprüche**

1. Verfahren zum Betreiben eines Sicherheitstokens zur Durchführung einer kryptographischen Operation, wobei dem Sicherheitstoken (100) ein biometrisch verschlüsseltes Geheimnis zugeordnet ist, wobei das Verfahren zum Betreiben des Sicherheitstokens aufweist:

- Empfangen zweiter biometrischer Daten (108') des biometrischen Merkmals der Person und einer Pseudoidentität (PI) durch das Sicherheitstoken,
- Speichern der zweiten biometrischen Daten (108') im Sicherheitstoken,
- Auslesen des biometrisch verschlüsselten Geheimnisses aus einem Speicher (112) des Sicherheitstokens (100),
- biometrisches Entschlüsseln des Geheimnisses unter Verwendung der zweiten biometrischen Daten (108') durch das Sicherheitstoken (100),
- Vergleichen der Pseudoidentität (PI) mit einem Hashwert (114) des unverschlüsselten Geheimnisses,
- Verwenden des Geheimnisses zur Durchführung der kryptographischen Operation, falls die Pseudoidentität (PI) mit dem Hashwert (114) des unverschlüsselten Geheimnisses identisch ist,
- Löschen des entschlüsselten Geheimnisses und der zweiten biometrischen Daten (108').

2. Verfahren nach Anspruch 1, bei dem das Geheimnis als Schlüssel zur Durchführung der kryptographischen Operation verwendet wird.

3. Verfahren nach Anspruch 1 oder 2, bei dem das biometrische Entschlüsseln des Geheimnisses durchgeführt wird durch Durchführen einer XOR-Operation (106) an dem verschlüsselten Geheimnis und den zweiten biometrischen Daten (108'), die ein inkorrektes Geheimnis bereitstellt, Fehlerkorrigieren (118) des inkorrekten Geheimnisses unter Verwendung des Fehlerkorrekturcodes, der das korrigierte Geheimnis bereitstellt, und ferner Löschen des inkorrekten Geheimnisses aufweist.

4. Verfahren nach Anspruch 1 oder 2, wobei dem Sicherheitstoken (100) ein Geheimnis entsprechend zugeordnet wird durch:

- Empfangen erster biometrischer Daten (108) eines biometrischen Merkmals einer Person durch das Sicherheitstoken,
- Speichern der ersten biometrischen Daten (108) in dem Sicherheitstoken (100),
- Speichern des unverschlüsselten Geheimnisses in dem Sicherheitstoken (100),
- biometrisches Verschlüsseln des Geheimnisses unter Verwendung der ersten biometrischen Daten (108) durch das Sicherheitstoken (100),
- Speichern des verschlüsselten Geheimnisses in dem Sicherheitstoken (100),
- Löschen des unverschlüsselten Geheimnisses und der ersten biometrischen Daten (108) aus dem Sicherheitstoken (100),
- Erzeugen (114) eines Hashwerts (114) des unverschlüsselten Geheimisses durch das Sicherheitstoken (100) und Ausgeben des Hashwertes.

5. Verfahren nach Anspruch 4, bei dem die ersten biometrischen Daten (108) und/oder das Geheimnis in einem flüchtigen Speicher (116) des Sicherheitstokens (100) gespeichert werden.

6. Verfahren nach Anspruch 4 oder 5, bei dem das Geheimnis von dem Sicherheitstoken (100) erzeugt wird.

7. Verfahren nach Anspruch 4, 5 oder 6, wobei das Sicherheitstoken (100) ein USB-Stick, eine Chipkarte, speziell eine Smartcard, eine SIM-Karte, speziell eine USIM-Karte, oder ein Ausweisdokument ist.

8. Verfahren nach einem der vorhergehenden Ansprüche, bei dem:

der Schritt des biometrischen Verschlüsselns des Geheimnisses durch Fehlerkorrekturcodierung (104) des unverschlüsselten Geheimnisses und Durchführen einer XOR-Operation (106) an dem fehlerkorrekturcodierten Geheimnis und den ersten biometrischen Daten (108) durchgeführt wird, um das biometrisch verschlüsselte Geheimnis bereitzustellen.

9. Verfahren nach einem der vorhergehenden Ansprüche 4 bis 8, bei dem die ersten biometrischen Daten (108) eine erste Anzahl (t) von Werten haben und das Geheimnis eine zweite Anzahl (k) von Stellen hat, die die Koeffizienten eines Polynoms (p) bestimmen), wobei die erste Anzahl größer als die zweite Anzahl ist, wobei der Schritt des biometrischen Verschlüsseins des Geheimnisses durch Errechnen eines reellen Punkts für jeden Wert der ersten biometrischen Daten unter Verwendung des Polynoms und Bereitstellen zufälliger streuender Punkte, die sich nicht an dem Polynom befinden, durchgeführt wird, wobei eine Vereinigungsmenge der Menge reeller Punkte und der Menge zufälliger Streupunkte das biometrisch verschlüsselte Geheimnis bereitstellt, und das ferner das Löschen der reellen Punkte und der zufälligen streuenden Punkte aus dem Sicherheitstoken (100) aufweist.

10. Verfahren nach Anspruch 9, bei dem das biometrische Entschlüsseln des Geheimnisses durchgeführt wird durch Identifizieren (126) wenigstens einer Teilmenge der in dem verschlüsselten Geheimnis enthaltenen reellen Punkte unter Verwendung der zweiten biometrischen Daten (108'), Bestimmen des Polynoms unter Verwendung der reellen Punkte, das das Geheimnis ergibt, und das ferner das Löschen der Identifizierungsinformationen, die die identifizierten reellen Punkte erkennen lassen, aus dem Sicherheitstoken (100) aufweist.

11. Speichermedium, das von einem Prozessor eines Sicherheitstokens (100) gelesen werden kann, wobei das Speichermedium Anweisungen enthält, die bei Ausführung durch den Prozessor des Sicherheitstokens (100) veranlassen, dass das Sicherheitstoken (100) ein Verfahren nach einem der vorhergehenden Ansprüche 1 bis 10 durchführt.

12. Sicherheitstoken (100) zum Durchführen eines Verfahrens nach einem der Ansprüche 1 bis 10, das aufweist:

- Mittel (111) zum Erfassen biometrischer Daten (108; 108');
- flüchtige Speichereinrichtung (116) zum zeitweiligen Speichern der biometrischen Daten und eines unverschlüsselten Geheimnisses,
- Mittel zum biometrischen Verschlüsseln (104, 106; 120, 122) des verschlüsselten Geheimnisses unter Verwendung biometrischer Daten, die von dem Mittel zum Erfassen biometrischer Daten erfasst wurden,
- nichtflüchtige Speichereinrichtung (112) zum Speichern des biometrisch verschlüsselten Geheimnisses,
- Mittel zum Erzeugen (114) eines Hashwertes des unverschlüsselten Geheimnisses durch das Sicherheitstoken und Ausgeben des Hashwertes.
- Mittel (116) zum Auslesen des verschlüsselten Geheimnisses aus der nichtflüchtigen Speichereinrichtung,
- Mittel zum biometrischen Entschlüsseln (106, 118; 126, 128) des verschlüsselten Geheimnisses unter Verwendung der biometrischen Daten unter Verwendung des Verfahrens von Anspruch 1.

wobei die biometrischen Daten (108; 108') von einem biometrischen Merkmal einer Person erfasst werden.

## Revendications

1. Procédé de mise en oeuvre d'un jeton de sécurité pour la réalisation d'une opération de cryptographie, le jeton de sécurité (100) y ayant attribué un secret crypté par biométrie, le procédé de mise en oeuvre du jeton de sécurité comprenant :

   - la réception d'une seconde donnée biométrique (108') de la caractéristique biométrique de la personne et d'une pseudo identité (PI) par le jeton de sécurité,
   - le stockage de la seconde donnée biométrique (108') dans le jeton de sécurité,
   - la lecture du secret crypté par la biométrie à partir d'une mémoire (112) du jeton de sécurité (100),
   - le décryptage par la biométrie du secret par l'utilisation de la seconde donnée biométrique (108') par le jeton de sécurité (100),
   - la comparaison de la pseudo identité (PI) avec une valeur de hachage (114) du secret non crypté,
   - l'utilisation du secret pour réaliser l'opération de cryptographie dans le cas où la pseudo identité (PI) est identique à la valeur de hachage (114) du secret non crypté,
   - l'effacement du secret décrypté et de la seconde donnée biométrique (108').

2. Procédé selon la revendication 1, dans lequel le secret est utilisé en tant que clé pour réaliser l'opération de cryptographie.

3. Procédé selon les revendications 1 ou 2, dans lequel le décryptage du secret par la biométrie est réalisée en effectuant une opération XOR (106) sur le secret crypté et la seconde donnée biométrique (108') qui procure un secret incorrect, (en effectuant) la correction de l'erreur (118) du secret incorrect en utilisant le code de correction de l'erreur qui procure le secret correct, et qui comprend en outre l'effacement du secret incorrect.

4. Procédé selon les revendications 1 ou 2, le jeton de sécurité (100) y ayant attribué un secret en fonction de :

- la réception de la première donnée biométrique (108) de la caractéristique biométrique de la personne par le jeton de sécurité,
- le stockage de la première donnée biométrique (108) dans le jeton de sécurité (100),
- le stockage du secret non crypté dans le jeton de sécurité (100),
- le décryptage par la biométrie du secret en utilisant la première donnée biométrique (108) par le jeton de sécurité (100),
- le stockage du secret crypté dans le jeton de sécurité (100),
- l'effacement du secret non crypté et de la première donnée biométrique (108) à partir du jeton de sécurité (100),
- la création (114) d'une valeur de hachage (114) du secret non crypté par le jeton de sécurité (100) et la production de la valeur de hachage.

5. Procédé selon la revendication 4, dans lequel la première donnée biométrique (108) et/ou le secret sont stockés dans une mémoire volatile (116) du jeton de sécurité (100).

6. Procédé selon les revendications 4 ou 5, dans lequel le secret est créé par le jeton de sécurité (100).

7. Procédé selon les revendications 4, 5 ou 6, le jeton de sécurité (100) étant une clé USB, une carte à puce, en particulier une carte intelligente, une carte SIM, en particulier une carte USIM, ou un document d'identité.

8. Procédé selon l'une quelconque des revendications précédentes, dans lequel l'étape de cryptage du secret par la biométrie est réalisée par encodage de la correction de l'erreur (104) du secret non crypté et la réalisation d'une opération XOR (106) du secret encodé de la correction de l'erreur et de la première donnée biométrique (108) pour mettre à disposition le secret crypté par la biométrie.

9. Procédé selon l'une quelconque des revendications 4 à 8 précédentes, dans lequel la première donnée biométrique (108) a un premier nombre (t) de valeurs et le secret a un second nombre (k) de chiffres déterminant les coefficients d'un polynôme (p), où le premier nombre est supérieur au second nombre, où l'étape du cryptage du secret par la biométrie est réalisée par le calcul d'un point réel pour chacune des valeurs de la première donnée biométrique en utilisant le polynôme, et la mise à disposition des points errants aléatoires qui ne sont pas situés sur le polynôme, où l'ensemble du rassemblement de l'ensemble des points réels et de l'ensemble des points errants aléatoires procure le secret crypté par la biométrie, et qui comprend en outre l'effacement des points réels et des points errants aléatoires à partir du jeton de sécurité (100).

10. Procédé selon la revendication 9, dans lequel le décryptage du secret par la biométrie est réalisé en identifiant (126) au moins un sous-ensemble de points réels contenus dans le secret crypté en utilisant la seconde donnée biométrique (108'), en déterminant le polynôme par l'utilisation des points réels qui procurent le secret, et en comprenant en outre l'effacement de l'information sur l'identification qui indique les points réels identifiés à partir du jeton de sécurité (100).

11. Support de stockage qui est lisible par le processeur d'un jeton de sécurité (100), le support de stockage contenant des instructions qui, lorsqu'elles sont exécutées par le processeur du jeton de sécurité (100) amènent le jeton de sécurité (100) à réaliser le procédé conformément à l'une quelconque des revendications 1 à 10 précédentes.

12. Jeton de sécurité (100) pour réaliser un procédé selon l'une quelconque des revendications 1 à 10 comprenant :

- des moyens (111) d'acquisition des données biométriques (108 ; 108'),
- des moyens de stockage volatil (116) pour stocker de manière temporaire les données biométriques et un secret non crypté,
- des moyens de cryptage par la biométrie (104, 106 ; 120, 122) le secret crypté utilisant les données biométriques acquises par les moyens d'acquisition des données biométriques,
- des moyens de stockage non volatil (112) pour le stockage du secret crypté par biométrie,
- des moyens de création (114) d'une valeur de hachage du secret non crypté par le jeton de sécurité et la production de la valeur de hachage,
- des moyens (116) de lecture du secret crypté à partir des moyens de stockage non volatil,
- des moyens de décryptage par la biométrie (106, 118 ; 126, 128) du secret crypté par l'utilisation des données biométriques en mettant en oeuvre le procédé selon la revendication 1,

où les données biométriques (108 ; 108') sont acquises à partir d'une caractéristique biométrique de la personne.

**100**

Token

**102**

RNG

**114**

Hash → PI

**104** ECC

**106** "⊕"

**110** **112**

Template

**116** Crypto-Coprocessor

**111**

**108** Biometrical Data →

# Fig. 1

**100**

Token

**110** Template **112**

**106** "⊕"

**118** ECC Decoder

Crypto-Coprocessor **116**

**114** Hash → PI

**111**

**108'** Biometrical Data →

# Fig. 2

| Receiving biometrical data A | 200 |
|---|---|
| Secret B | 202 |
| Error correction encoding of the secret B = > b | 204 |
| b XOR A = T | 206 |
| Storing of T | 208 |
| Erasing of A and B | 210 |

**Fig. 3**

| Receiving biometrical data A' | 300 |
|---|---|
| T XOR A' = b' | 302 |
| Error correction b' = > B | 304 |
| Usage of B | 306 |
| Erasing of A', b' and B | 308 |

**Fig. 4**

**Fig. 5**

**Fig. 6**

Receiving biometrical data A having t values — **400**

Secret B having k digits determining polynom p having degree k-1, where t > k — **402**

Calculate a real point for each value of A using polynom p — **404**

Random choice of a number r - t stray points that are not located on the polynom p — **406**

Storing of the points as T — **408**

Erasing of A and B — **410**

## Fig. 7

Receiving of biometrical data A' — **500**

Identify real points in T using A' — **502**

Determination of polynom p using the real points — **504**

Usage of B — **506**

Erasing of A', B and the identification information regarding the real points — **508**

## Fig. 8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2008010773 A